# EUROPEAN PATENT SPECIFICATION

(11) **EP 2 366 844 B1**
(45) Date of publication and mention of the grant of the patent: **19.08.2015**
(21) Application number: 11001606.0
(22) Date of filing: 28.02.2011
(51) Int. Cl.: E04D 13/14, E04D 13/147, B21D 22/02, B21D 28/02, B23D 15/00

(54) **Flashing cover with at least one internal corner and method of manufacturing thereof**
Abdichtungsabdeckung mit mindestens einer Innenecke und Herstellungsverfahren dafür
Couverture d'étanchéité avec au moins un coin interne et son procédé de fabrication

(30) Priority: 10.03.2010 PL 39067210
(43) Date of publication of application: 21.09.2011
(73) Proprietor: FAKRO PP Spolka z o.o., 33-300 Nowy Sacz (PL)
(72) Inventor: Mucha, Lukasz, 33-330 Grybów (PL); Szyszka, Jósef, 33-340 Stary Sacz (PL)
(74) Representative: Lukaszyk, Szymon

(56) References cited:
- EP-A1- 1 424 455
- EP-A2- 0 206 341
- WO-A1-94/00654
- AT-B- 334 051
- DE-A1- 2 523 575
- DE-A1- 2 910 610
- DE-A1-102005 007 215
- DE-A1-102007 008 653
- DE-U1- 29 824 737

## Description

The present invention relates to a flashing cover with at least one internal corner, apt to seal object installed within a roof of the building such as roof windows, chimneys and solar panels embodied in a roof surface. The internal corner of the cover cooperates with an external corner of an object embodied in a roof. The present invention relates also to a method of manufacturing such a flashing cover.

### BACKGROUND OF THE INVENTION

Various flashing covers for objects embodied in roofs of buildings are known from the state of art. Usually they surround at least part of such an object. Usually such flashing covers are provided with at least one polygonal cutout apt to cooperate with an external corner of an object embodied in a roof. In this cutout or recess a sheet of metal is slanted forming uniform flange of the cutout that in a case of a rectangular cutout comprise two perpendicular walls interconnected with a curved wall (in case of a rectangular cutout it is a quarter of a circle). Due to technological issues such a curved wall must have a curvature of a relatively large radius. Unfortunately this feature does not ensure appropriate tightness of the cover in the neighbourhood of objects embodied in the roof of the building.

Flashing covers with flanges having walls substantially perpendicular to each other are known e.g. from the prior art publications DE 2523575 A1, DE 2910610 A1, AT 334051 B, EP 1424455 A1 or DE 298 24 737 U1. These covers however are not uniform and their flanges are formed by separate walls connected over the edges, by soldering, brazing, welding or other connecting techniques. Therefore manufacturing of such covers is rather complicated and comprises a sequence of separate processing stages.

### SUMMARY OF THE INVENTION

According to the present invention there is provided a flashing cover with at least one internal corner, apt to seal constructions installed within a roof of a building, in a form of a thin substantially flat sheet of metal provided at its periphery with at least one polygonal cutout wherein at least two side walls of this cutout are one-sidedly slanted forming the walls of the cover joined together into a uniform flange of this polygonal cutout. Among these two adjacent walls of the flange of the polygonal cutout, at least one non-perpendicular wall is so shaped that the plane crossing the line of connection of this wall with the main part of the cover and the edge of this wall, is arranged at an obtuse angle with respect to the main part of the cover. At the internal corner of the walls of the flange of the polygonal cutout, at the connection of the edges of these walls, a radius of a curvature of the edges of this polygonal cutout flange is many times smaller than a radius of a curvature of the base of this flange, wherein the base is the line of connection of the walls of the polygonal cutout with the main part of the cover. The second wall of these two adjacent walls of the polygonal cutout flange is flat and substantially perpendicular relative to the cover main part.

According to the first preferable variant of an arrangement of a non-perpendicular wall with an adjacent wall of a cutout, the non-perpendicular wall is flat and slanted at an obtuse angle with respect to the cover main part. The non-perpendicular wall is formed by bending of a metal sheet of the cover, wherein at the connection of both surfaces exists a minimal bend radius resulting from technological conditions. A connection between the non-perpendicular wall and an adjacent flange wall has approximately a form of a cone side surface segment.

According to a second preferable variant of an arrangement of a non-perpendicular wall with an adjacent wall of a cutout, the non-perpendicular wall is a segment of a cylindrical surface, curved with a curvature radius that is many times greater that in the above first preferable variant. The value of this radius approximately equals a height of the flange, while a surface of a non-perpendicular wall transforms roundly into a surface of the cover main part converting from a cylindrical shape of a flange wall into a plane shape of the cover main part. Transformation of a non-perpendicular wall into a flange second wall, arranged substantially perpendicularly relative to the cover main part, is also rounded.

In a cover according to the present invention, a cutout (or cutouts) with an internal corner may be located in various places of a cover depending on a shape of a construction passing through a roof slope and on a shape of external corners of such a construction with which a cover according to the present invention shall cooperate, as well as on an arrangement of neighbouring constructions.

In one preferred embodiment of the present invention, a flashing cover has a rectangular shape and has only one, preferable rectangular, cutout formed in its corner. This flashing cover may cooperate with one external corner of a construction passing through a roof. The cutout is provided with a flange as described above, the one wall of which is a wall being non-perpendicular with respect to the cover main part, wherein it is irrelevant which wall of a flange is such a non-perpendicular wall. According to alternative preferred embodiment of the present invention, a flashing cover is also of a rectangular shape and has two, preferably rectangular, cutouts formed in its adjacent corners. Such a flashing cover may cooperate with external corners of two neighbouring constructions passing through a roof. Both cutouts have flanges, as presented in the preceding part of the present description, and in each of these cutouts at least one wall is not perpendicular relative to the cover main part, wherein it is irrelevant which wall of a flange is such a non-perpendicular wall. A distance between edges of two cutouts that are parallel in relation to each other matches a distance between external walls of the neighbouring constructions passing through a roof.

According to another preferred embodiment of the present invention, a flashing cover is also of a rectangular shape and has one polygonal, preferably rectangular, cutout arranged on a section of the edge of the cover between the cover corners. This cutout has a flange of a construction as described above which is formed by bending of a cover metal sheet rim area, wherein in this flange at least two walls, running from the edge of the cover inside the cutout, are walls non-perpendicular with respect the cover main part. The third wall of this flange, connecting said non-perpendicular walls, may be flat and substantially perpendicular relative to the cover main part, or alternatively may also be a non-perpendicular wall as the other flange walls. Such a flashing cover may cooperate with two external corners of a construction passing through a roof.

In another preferred embodiment of the present invention, a flashing cover is also of a rectangular shape and has one polygonal, preferably rectangular, cutout similarly as in the preceding embodiment. However contrary to the preceding embodiment, the walls of a flange, running from the edge of the cover inside the cutout, are flat and substantially perpendicular relative to the cover main part, and a wall, connecting these perpendicular walls, is not perpendicular with respect the cover main part.

According to the present invention there is also provided a method of manufacturing a flashing cover, apt to seal constructions installed within a roof of a building, in a form of a thin substantially flat sheet of metal provided at its periphery with at least one polygonal cutout wherein at least two side walls of this cutout are one-sidedly slanted forming the walls of the cover joined together into a uniform flange of this cutout and joined with a main part of the cover. The method according to the present invention comprises the first step of forming in a sheet of metal an embossed area having a bottom of a shape and dimensions corresponding to given desired shape and dimensions of the final produced cover cutout. The bottom of said embossed area is connected with a main, substantially flat, part of the cover by side walls of this cutout. At least one of these walls is a non-perpendicular wall which is so shaped that the plane crossing the line of a connection of this wall with the main part of the cover and the edge of this wall is arranged at an obtuse angle with respect to the cover main part.

Subsequently after formation of said embossed area, the second step of cutting out the bottom of the embossed area from the sheet of metal thus forming a cutout in the cover, is carried out. The bottom is preferably cut out using a blanking tool with a stamp moveable perpendicularly relative to the main surface of the cover that is produced. In case of a cover with two cutouts, both embossed areas may be formed concurrently or separately one after the other. Similarly a process of cutting out of cutout of embossed areas may be realized concurrently or separately.

A flashing cover according to the present invention owing to a minimal radius of a curvature in an area of a corner of flange neighbouring edges of a cutout, providing that such a cover tightly adheres to an external corner of a construction passing through a roof, provides an advantageous effect of very good tightness of a roof in an area round such a construction. A method according to the present invention enables for forming such a preferable minimal curvature radius in a corner of a cutout.

### BRIEF DESCRIPTION OF THE DRAWINGS

The invention is illustrated below with reference to the preferred embodiments thereof that should not be considered in any way as limitative and with reference to the attached drawings on which:
Fig. 1 shows a flashing cover having rectangular cutouts formed in two corners with a flange having a non-perpendicular flat wall and a wall substantially perpendicular relative to a main part of the cover;
Fig. 2 is a cross-sectional view along the line A-A shown in Fig. 1 through two non-perpendicular walls of the flange and a section of the cover main part connecting these walls;
Fig. 3 is a cross-sectional view along the line B-B shown in Fig. 1 through the perpendicular wall of the flange and a cover main part section connected thereto;
Fig. 4 shows an axonometric view of the flashing cover presented in Fig. 1;
Fig. 5 shows a flashing cover having rectangular cutouts formed in two corners with a flange having two non-perpendicular curved walls;
Fig. 6 is a cross-sectional view along the line C-C shown in Fig. 5 through two non-perpendicular walls of the flange and a section of the cover main part connecting these walls;
Fig. 7 is a cross-sectional view along the line D-D shown in Fig. 5 through the non-perpendicular wall of the flange and a cover main part section connected thereto;
Fig. 8 shows an axonometric view of the flashing cover presented in Fig. 5;
Fig. 9 shows a flashing cover having one cutout formed on a section of the edge of the cover between the cover corners with a flange having two flat non-perpendicular walls and one wall substantially perpendicular relative to the cover main part;
Fig. 10 is a cross-sectional view along the line E-E shown in Fig. 9 through one of the non-perpendicular walls of the flange and a section of the cover main part adjacent to this wall;
Fig. 11 is a cross-sectional view along the line F-F shown in Fig. 9 through the perpendicular wall of the flange and a cover main part section connected thereto;
Fig. 12 shows an axonometric view of the flashing cover presented in Fig. 9;
Fig. 13 shows an axonometric view of a blank for manufacturing the cover of Fig. 1 with two embossed areas formed in the corners of the blank (illustrating one of the main steps of a method of manufacturing a flashing cover according to the present invention);
Fig. 14 shows an axonometric view of a blank for manufacturing the flashing cover of

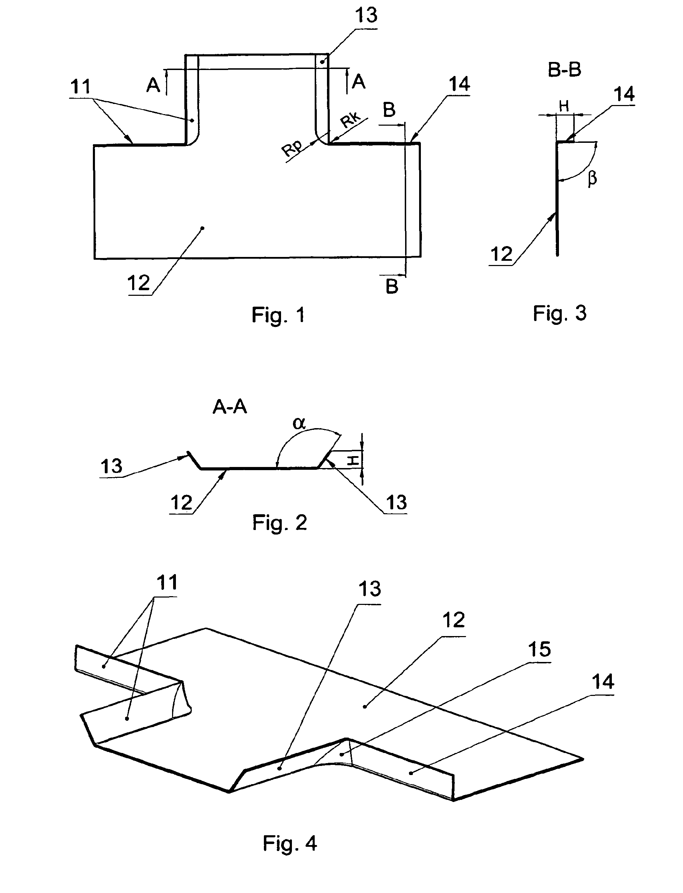

Fig. 1 after cutting out of one embossed area (illustrating subsequent step of a method of manufacturing a flashing cover according to the present invention).

The invention is also discussed with reference to its embodiments not depicted on the drawings but disclosed in the present description with indication of common features and differences in relation to the illustrated embodiments.

### DESCRIPTION OF PREFERRED EMBODIMENTS

Embodiment 1. A flashing cover has a form of a rectangular thin sheet of metal having rectangular cutouts formed in two adjacent corners. The edges of these cutouts are one-sidedly slanted forming cover walls joined together into a uniform flange 11 (a so called "fold section") connected with the main part 12 of the cover. In each cutout, one wall 13 is not perpendicular relative to the cover main part 12. This non-perpendicular wall is flat and is arranged at an obtuse angle "α" with respect to the main part of the cover (cf. cross-section "A-A" at Fig. 2). The plane positioned at an obtuse angle "α" relative to the cover main part 12 and crossing the edge of this wall and the line of connection of this wall with the cover main part surface is identical with the plane of the non-perpendicular wall 13.

The second wall 14 of the flange 11 is flat and substantially perpendicular relative to the cover main part 12 (cf. cross-section "B-B" at Fig. 3). Expression "substantially perpendicular" means according to the invention that an angle β between this wall and substantially flat main part of the cover may diverge from the right angle by a value resulting from technological inclinations and tolerated shape deviations. A height "H" of the flange 11 is identical at both of its walls 13, 14. A radius Rₖ of a curvature of the edges of the connection of both walls 13, 14 of the flange 11 is many times smaller than a radius Rp of a curvature of the flange base, wherein the base is the line of connection of the wall 13, 14 of the polygonal cutout with the cover main part 12. It is preferred that the radius Rₖ is as much as possible close to zero. A connecting area 15 between both walls 13, 14 of the flange 11 has a form of a cone (not necessarily a circular cone) side surface segment.

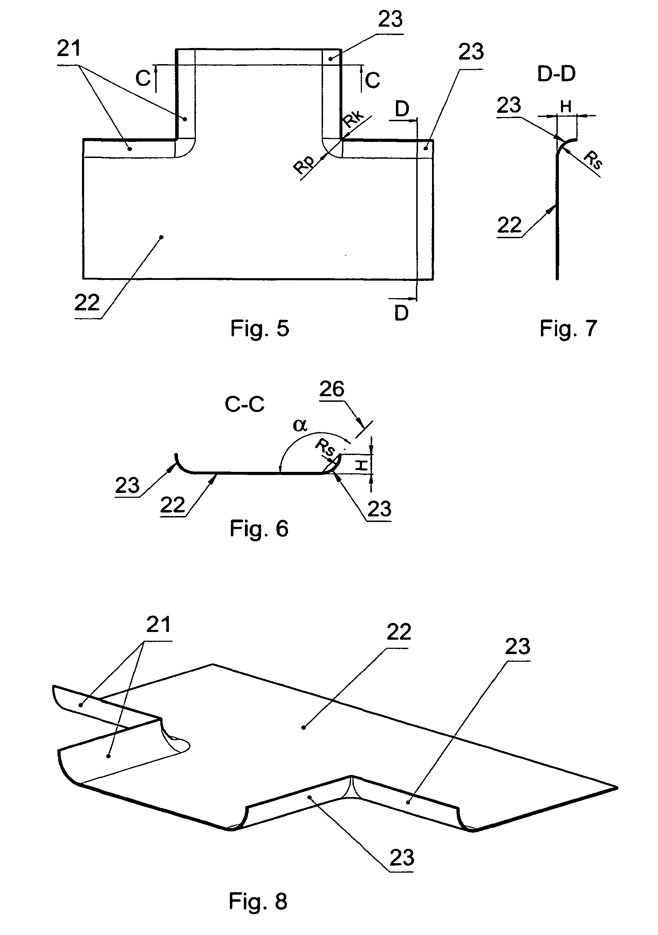

Embodiment 2. A flashing cover has a form of a rectangular thin sheet of metal having rectangular cutouts formed in two adjacent corners. The edges of these cutouts are one-sidedly slanted forming cover walls joined together into a uniform flange 21 (a so called "fold section") connected with the main part 22 of the cover. In each cutout both walls 23 are not perpendicular relative to the cover main part 22. These non-perpendicular walls 23 are curved with a curvature radius Rₛ and transform smoothly into a surface of the cover main part 21. The plane 26 arranged at an obtuse angle "α" with respect to the cover main part 22 and crossing the edge of the non-perpendicular wall 23 and the line of connection of this wall 23 with the cover main part surface, is in cross-sectional views through the walls 23 of the cutout seen as a chord of an arch draught by a radius Rₛ of a curvature of these walls (cf. cross-sections "C-C" and "D-D" at Figs. 6 and 7). Mutual dependences between curvature radiuses Rₖ and Rₚ are the same as the dependences in Embodiment 1.

Embodiment 3. A flashing cover has two cutouts formed in its corners as in the preceding Embodiments. In each cutout, one wall is curved, as shown in cross-section "C-C" or "D-D" (Figs. 6 and 7), and the second wall is flat and approximately perpendicular relative to the cover main surface, as shown in cross-section "B-B" (Fig. 3). Mutual dependences between curvature radiuses Rₖ and Rp are the same as the dependences in Embodiment 1.

Embodiment 4. A flashing cover has two cutouts formed in its corners, similarly as in the preceding Embodiments. In each cutout both walls of the flange are flat and arranged at an obtuse angle "α" with respect to the main part of the cover, as shown in cross-section "A-A" (Fig. 2). The walls are connected by a connecting area in a form of a segment of a cone side surface. Mutual dependences between curvature radiuses Rₖ and Rₚ are the same as the dependences in Embodiment 1.

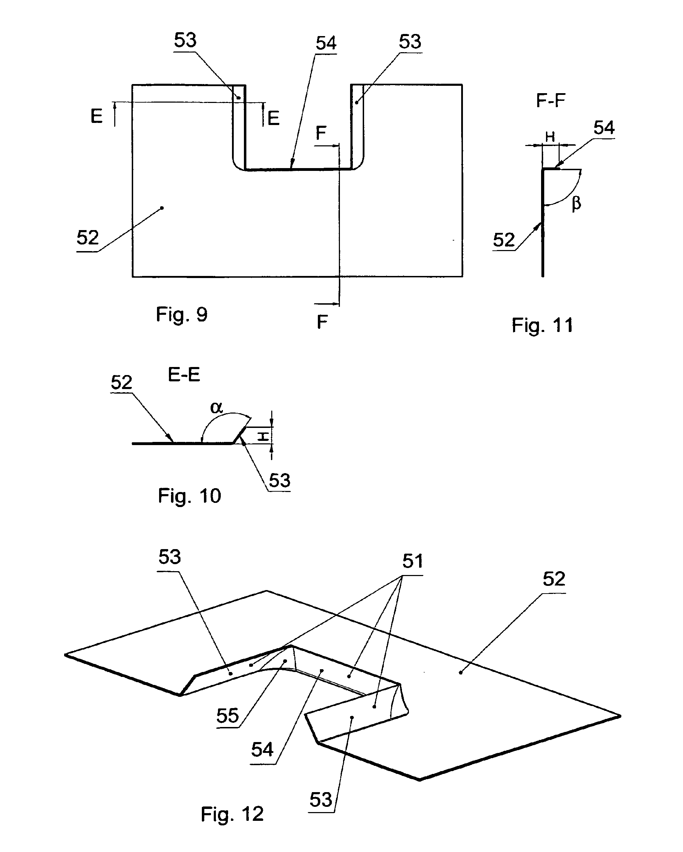

Embodiment 5. A flashing cover has a form of a rectangular thin sheet of metal having a rectangular cutout formed on a section of one of the edge of the cover between its two adjacent corners. The edges of this cutout are one-sidedly slanted forming three walls of the cover joined together into a uniform flange 51 (a so called "fold section") having a height "H" and connected with the cover main part 52. Two flange walls 53 running from the edge of the cover inside the cutout are not perpendicular relative to the cover main part 52. These non-perpendicular walls 53 are flat and arranged at an obtuse angle "α" with respect to the main part 52 of the cover (cf. cross-section "E-E" at Fig. 10). The plane positioned at an obtuse angle "α" relative to the cover main part 52 and crossing the edge of the non-perpendicular wall 53 and the line of connection of this wall with the cover main part 52 surface is identical with the plane of the non-perpendicular wall 53.

Both non-perpendicular walls 53 in the flange 51 of the cutout are joined by the connecting central wall 54 which is flat and substantially perpendicular to the cover main part 52 (cf. cross-section "F-F" at Fig. 3). Expression "substantially perpendicular" means according to the invention that an angle "β" between the central wall 54 and the cover main part 52 may diverge from the right angle by a value resulting from technological inclinations and tolerated shape deviations. Mutual dependences between curvature radiuses Rₖ and Rp are the same as the dependences in Embodiment 1. Connecting areas 55 between the central wall 54 and the non-perpendicular flange 51 walls 53 adjacent relative to the central wall 54, are segments of a cone (not necessarily a circular cone) side surface.

Embodiment 6. A flashing cover has a form of a rectangular thin sheet of metal having a rectangular cutout formed on a section of one of the edge of the cover between its two adjacent corners. The edges of this cutout are one-sidedly slanted forming walls of the cover joined together into a uniform flange (a so called "fold section") having a height "H" and connected with the cover main part. Contrary to the cover according to Embodiment 5, two walls of the flange running from the edge of the cover inside the cutout are flat and substantially perpendicular relative to the cover main part, whereas the flange third wall connecting said two walls is a non-perpendicular wall. Mutual dependences between curvature radiuses Rₖ and Rp are the same as the dependences in Embodiment 1.

Embodiment 7. A flashing cover has a rectangular cutout only in one corner and a set of both walls forming a flange of this cutout imitates one of the wall sets presented in preceding Embodiments. Mutual dependences between curvature radiuses Rₖ and Rp are the same as the dependences in Embodiment 1.

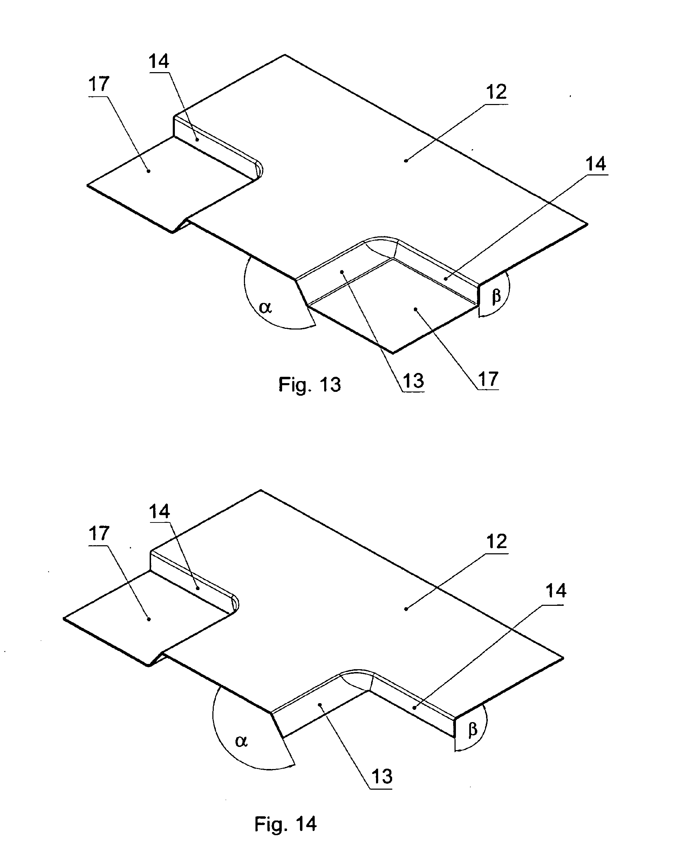

Embodiment 8 - An exemplary method of manufacturing a flashing cover according to the present invention. For illustrating a method according to the present invention, a method for manufacturing the flashing cover of Embodiment 1 is below described. For obtaining a minimal value of a radius Rₖ between the edges of adjacent walls of a flange, the cover is manufactured in such a manner that in the first step in a sheet of metal an embossed area is formed having a bottom 17 of a shape and dimensions matching given desired shape and dimensions of the final produced cover cutout. The bottom 17 of the embossed area is parallel relative to the cover main part, which is substantially flat, and is connected with the main part by its side walls. At least one of the walls of the embossed area is a non-perpendicular wall 13 which is shaped in such a manner that the plane crossing the line of a connection of this non-perpendicular wall 13 with the main part 12 of the cover and the line of a connection of this wall with the bottom 17 of the embossed area, is arranged at an obtuse angle "α" with respect to the main part 12 of the cover. In a cover having two embossed areas (as shown in Fig. 13), the areas may be formed either one after the other or concurrently.

In the subsequent step, in such a cover with embossed areas, the bottom of embossed area 17 is cut out thus forming a cutout in a cover. The bottom of an embossed area is cut out using a blanking tool with a stamp moveable perpendicularly relative to the main surface 12 of the cover that is produced, wherein the cutting line of the blanking tool stamp matches a cutout outline that is produced. In a cover with two embossed areas, the bottoms of the areas 17 may be cut out sequentially (Fig. 14 presents a cover after cutting out of one embossed area), or alternatively bottoms of both embossed areas 17 may be cut out concurrently.

## Claims

1. A flashing cover with at least one internal corner, apt to seal constructions installed within a roof of a building, in a form of a thin substantially flat sheet of metal provided at its periphery with at least one polygonal cutout wherein at least two side walls of this cutout are one-sidedly slanted forming the side walls of the cover that are integrated forming a uniform flange of this cutout which is integrated with a main part of the cover, **characterized in that**, among the two adjacent walls (11, 21, 51) of the flange of said at least one polygonal cutout, at least one non-perpendicular wall (13, 23, 53) is so shaped that the plane crossing the line of connection of this wall with the main part (12, 22, 52) of the cover and the edge of this wall is arranged at an obtuse angle (α) with respect to the main part of the cover, wherein at the internal corner of the walls of the flange of the polygonal cutout, at the connection of the edges of these walls, the radius (Rₖ) of the curvature of the edges of this flange is substantially smaller than the radius (Rp) of the curvature of the base of this flange, wherein the base is the line of connection of the walls of the polygonal cutout with the main part of the cover.

2. The flashing cover according to claim 1, **characterized in that**, said at least one non-perpendicular wall (13, 53) is flat and slanted at an obtuse angle (α) with respect to the main part (12, 52) of the cover, and an area (15, 55) constituting a connecting area between this non-perpedicular wall (13, 53) and the neighbouring wall (14, 54) has approximately a form of a cone side surface segment.

3. The flashing cover according to claim 1, **characterized in that**, said at least one non-perpendicular wall (23) is curved with a curvature radius (Rₛ) amounting approximately a height (H) of the flange (21) and transforms smoothly into a surface of the main part (22) of the cover.

4. The flashing cover according to claim 1 or 2 or 3, **characterized in that**, among the two adjacent walls of the flange of the polygonal cutout, the second wall (14, 54) is flat and substantially perpendicular relative to the main part (12, 52) of the cover.

5. The flashing cover according to claim 1 or 2 or 3 or 4, **characterized in that**, said at least one polygonal cutout, preferably rectangular cutout, is arranged in a corner of the cover.

6. The flashing cover according to claim 5, **characterized in that**, it has two polygonal cutouts formed in two, preferably neighbouring, corners of the cover.

7. The flashing cover according to claim 1 or 2 or 3, **characterized in that**, said at least one polygonal cutout, preferably rectangular cutout, is arranged on a section of the edge of the cover between the cover corners.

8. The flashing cover according to claim 7, **characterized in that**, the cutout has a quadrilateral shape, preferably a rectangular shape, and in its flange (51) two non-perpendicular walls are formed running from the edge of the cover inside the cutout.

9. The flashing cover according to claim 8, **characterized in that**, it has the third wall (54) of the cutout, connecting said non-perpendicular walls (53), which is flat and substantially perpendicular relative to the main part (52) of the cover.

10. The flashing cover according to claim 7, **characterized in that**, the cutout has a quadrilateral shape, preferably rectangular shape, and in its flange two flat walls substantially perpendicular relative to the cover main part and running from the edge of the cover inside the cutout, are connected by a non-perpendicular wall.

11. A method of manufacturing a flashing cover, apt to seal constructions installed within a roof of a building, in a form of a thin substantially flat sheet of metal provided at its periphery with at least one polygonal cutout wherein at least two sides of this cutout are one-sidedly slanted forming the walls of the cover joined together into a uniform flange of this cutout and joined with a main part of the cover, **characterized in that**, it comprises the steps of:
forming in a sheet of metal an embossed area (17) having a bottom of a shape and dimensions corresponding to desired shape and dimensions of the final produced cover cutout, wherein the embossed area (17) bottom is connected with a main, substantially flat, part (12) of the cover by side walls (13, 14) of this cutout, and among these two walls at least one non-perpendicular wall (13) is so shaped that the plane crossing the line of connection of this wall with the main part (12) of the cover and the edge of this wall is arranged at an obtuse angle (α) with respect to the main part (12) of the cover; and
cutting out the bottom of the embossed area (17) from the sheet of metal thus forming a cutout in the cover.

12. The method according to claim 11, **characterized in that**, the bottom of the embossed area (17) of the cover is cut out using a blanking tool with a stamp moveable perpendicularly relative to the main surface of the cover that is produced.

13. The method according to claim 11 or 12, **characterized in that**, two embossed areas are formed concurrently and subsequently cut out and the cover with two cutouts is produced.

## Patentansprüche

1. Dichtungsabdeckung mit mindestens einer Innenecke, bestimmt zum Abdichten von Baukonstruktionen, die im Dach der Bauten installiert sind - in Form eines dünnen, grundsätzlich flachen Metallblechs, das auf seinem Umfang mindestens eine polygonale Aussparung aufweist, wobei mindestens zwei Seitenwände dieser Aussparung einseitig geneigt sind und so die Seitenwände der besagten Abdeckung bilden, die integriert sind und so einen einheitlichen Flansch dieser Aussparung bilden, der mit dem Hauptteil der Abdeckung integriert ist, **dadurch gekennzeichnet, dass** unter den zwei benachbarten Wänden (11, 21, 51) dieses besagten Flansches von mindestens einer polygonalen Aussparung, mindestens eine Wand, bestimmt als eine nicht senkrechte Wand (13, 23, 53), so ausgestaltet ist, dass die Fläche, die durch die Verbindungslinie dieser Wand mit dem Hauptteil (12, 22, 52) der Abdeckung sowie durch die Kante dieser Wand durchgeht, unter einem stumpfen Winkel (α) in Bezug auf den Hauptteil der Abdeckung angeordnet ist, wobei in der Innenecke der Wände des Flansches der besagten polygonalen Aussparung, an der Verbindung der Kanten dieser Wände, der Rundungsradius der Kanten (Rₖ) dieses Flansches grundsätzlich kleiner als der Rundungsradius der Grundplatte (Rₚ) dieses Flansches ist, wobei die besagte Grundplatte eine Verbindungslinie der Wände der polygonalen Aussparung mit dem Hauptteil der Abdeckung darstellt.

2. Die Dichtungsabdeckung gemäß Anspruch 1, dadurch gekennzelchnet, dass die besagte, mindestens eine nicht senkrechte Wand (13, 53) flach und unter dem stumpfen Winkel (α) zum Hauptteil (12, 52) der Abdeckung geneigt ist, und die Fläche (15, 55), die eine Verbindungsfläche zwischen der besagten, nicht senkrechten Wand (13, 53) und der benachbarten Wand (14, 54) darstellt, eine dem Abschnitt der Seitenfläche eines Kegels angenäherte Form hat.

3. Die Dichtungsabdeckung gemäß Anspruch 1, **dadurch gekennzeichnet, dass** die besagte, mindestens eine nicht senkrechte Wand (23) mit dem Radius (Rₛ) gebogen ist, dessen Wert dem Wert der Höhe (H) des Flansches (21) angenähert ist, und mit der Fläche des Hauptteiles (22) der Abdeckungen glatt verbunden ist.

4. Die Dichtungsabdeckung gemäß Anspruch 1 oder 2 oder 3, **dadurch gekennzeichnet, dass** unter den zwei benachbarten Wänden des Flansches der polygonalen Aussparung, die zweite Wand (14, 54) flach und grundsätzlich senkrecht zum Hauptteil (12, 52) der Abdeckung steht.

5. Die Dichtungsabdeckung gemäß Anspruch 1 oder 2 oder 3 oder 4, **dadurch gekennzeichnet, dass** die besagte, mindestens eine vorzugsweise rechteckige, polygonale Aussparung in einer Ecke der Abdeckung angeordnet ist.

6. Die Dichtungsabdeckung gemäß Anspruch 5, **dadurch gekennzeichnet, dass** sie zwei polygonale Aussparungen in zwei, vorzugsweise benachbarten Ecken der Abdeckung aufweist.

7. Die Dichtungsabdeckung gemäß Anspruch 1 oder 2 oder 3, **dadurch gekennzeichnet, dass** die besagte, mindestens eine vorzugsweise rechteckige polygonale Aussparung auf dem Abschnitt des Randes der Abdeckung zwischen ihren Ecken angeordnet ist.

8. Die Dichtungsabdeckung gemäß Anspruch 7, **dadurch gekennzeichnet, dass** die besagte Aussparung eine vierseitige, vorzugsweise rechteckige Form hat, und in ihrem Flansch (51) zwei nicht senkrechte Wände geformt sind, die vom Rand der Abdeckung bis in die Tiefe dieser Aussparung verlaufen.

9. Die Dichtungsabdeckung gemäß Anspruch 8, **dadurch gekennzeichnet, dass** die dritte Wand (54) der besagten Aussparung, welche die nicht senkrechten Wände (53) verbindet, flach ist und angenähert senkrecht zum Hauptteil (52) der Abdeckung steht.

10. Die Dichtungsabdeckung gemäß Anspruch 7, **dadurch gekennzeichnet, dass** die besagte Aussparung eine vierseitige, vorzugsweise rechteckige Form hat, und in ihrem Flansch zwei flache und grundsätzlich senkrecht zum Hauptteil der Abdeckung stehende und vom Rand der Abdeckung bis in die Tiefe der Aussparung verlaufende Wände aufweist, die mit einer nicht senkrechten Wand verbunden sind.

11. Das Herstellungsverfahren der Dichtungsabdeckung, bestimmt zum Abdichten von Baukonstruktionen, die im Dach der Bauten installiert sind, welche die Form eines dünnen, grundsätzlich flachen Metallblechs hat, das auf seinem Umfang mindestens eine polygonale Aussparung aufweist, wobei mindestens zwei Seitenwände dieser Aussparung einseitig geneigt sind und so die Wände der besagten Abdeckung bilden, die miteinander zur Form eines einheitlichen Flansches dieser Aussparung und mit dem Hauptteil der besagten Abdeckung verbunden sind, **dadurch gekennzeichnet, dass** sie folgende Etappen enthält: Formen einer Prägung (17) in einem Metallblech, deren Boden die Form und Abmessungen hat, die der gewünschten Form und Abmessungen der endgültigen Gestaltungsform der Aussparung entsprechen, wobei der Boden der Prägung (17) mit dem grundsätzlich flachen Hauptteil (12) der Abdeckung verbunden ist, und zwar mit Hilfe der Seitenwände (13, 14) dieser Aussparung, sowie unter diesen zwei Wänden mindestens eine Wand ist (13), bestimmt als eine nicht senkrechte Wand, so ausgestaltet ist, dass die Fläche, die durch die Verbindungslinie dieser Wand mit dem Hauptteil (12) der Abdeckung und durch die Kante dieser Wand geht, unter einem stumpfen Winkel (α) in Bezug auf den Hauptteil (12) der Abdeckung angeordnet, und das Ausschneiden des Bodens der Prägung (17) aus dem besagten Metallblech, so dass auf diese Art und Weise die Aussparung in der besagten Abdeckung gebildet wird.

12. Das Verfahren gemäß Anspruch 11, **dadurch gekennzeichnet, dass** der Boden der besagten Prägung (17) der Abdeckung mit einem Stanzwerkzeug ausgeschnitten wird, und zwar mit einem Stempel, der senkrecht zur Hauptfläche der auszustanzenden Abdeckung verschiebbar ist.

13. Das Verfahren gemäß Anspruch 11 oder 12, **dadurch gekennzeichnet, dass** zwei Prägungen gleichzeitig formiert und anschließend ausgestanzt werden, indem eine Abdeckung mit zwei Aussparungen gebildet wird.

## Revendications

1. Un couvercle clignotant avec au moins un coin interne, apte à sceller les constructions installées dans un toit d'un bâtiment, sous une forme d'une mince feuille de métal sensiblement plate pourvue à sa périphérie d'au moins une découpe polygonale où au moins deux parois latérales de cette découpe sont unilatéralement inclinées formant les parois latérales du couvercle qui sont intégrées formant une bride uniforme de cette découpe qui est intégrée à une partie principale du couvercle, **caractérisé en ce que**, entre les deux parois adjacentes (11, 21, 51) de la bride de ladite au moins une découpe polygonale, au moins une paroi non perpendiculaire (13, 23, 53) est formée de manière que le plan franchissant la ligne de connexion de cette paroi avec la partie principale (12, 22, 52) du couvercle et le bord de cette paroi est disposé à un angle obtus (α) par rapport à la partie principale du couvercle, où au coin interne des parois de la bride de la découpe polygonale, au niveau du raccordement des bords de ces parois, le rayon (Rₖ) du couvercle des bords de cette bride est sensiblement plus petit que le rayon (Rp) du couvercle de la base de cette bride, où la base est une ligne de connexion des parois de la découpe polygonale avec la partie principale du couvercle.

2. Le couvercle clignotant selon la revendication 1, **caractérisé en ce que**, ladite au moins une paroi non perpendiculaire (13, 53) est plate et inclinée à un angle obtus (α) par rapport à la partie principale (12, 52) du couvercle, et une zone (15, 55) constituant une zone de liaison entre cette paroi non perpendiculaire (13, 53) et la paroi voisine (14, 54) a approximativement la forme d'un segment de surface latérale de cône.

3. Le couvercle clignotant selon la revendication 1, **caractérisé en ce que**, ladite au moins une paroi non perpendiculaire (23) est incurvée avec un rayon de courbure (Rₛ) montant à peu près à la hauteur (H) de la bride (21) et se transforme harmonieusement en surface de la partie principale (22) du couvercle.

4. Le couvercle clignotant selon la revendication 1 ou 2 ou 3, **caractérisé en ce que**, entre les deux parois adjacentes de la bride de la découpe polygonale, la seconde paroi ( 14, 54) est plate et sensiblement perpendiculaire par rapport à la partie principale (12, 52) du couvercle.

5. Le couvercle clignotant selon la revendication 1 ou 2 ou 3 ou 4, **caractérisé en ce que**, ladite au moins une découpe polygonale, de préférence découpe rectangulaire, est disposée dans un coin du couvercle.

6. Le couvercle clignotant selon la revendication 5, **caractérisé en ce que**, il possède deux découpes polygonales formées dans deux coins, de préférence voisins, du couvercle.

7. Le couvercle clignotant selon la revendication 1 ou 2 ou 3, **caractérisé en ce que**, ladite au moins une découpe polygonale, de préférence découpe rectangulaire, est disposée sur une section du bord du couvercle entre les coins du couvercle.

8. Le couvercle clignotant selon la revendication 7, **caractérisé en ce que**, la découpe a une forme de quadrilatère, de préférence une forme rectangulaire, et dans sa bride (51) deux parois non perpendiculaires sont formées de manière qu'elles vont à partir du bord du couvercle à l'intérieur de la découpe.

9. Le couvercle clignotant selon la revendication 8, **caractérisé en ce que**, il possède la troisième paroi (54) de la découpe, reliant lesdites parois non perpendiculaires (53), qui est plate et sensiblement perpendiculaire par rapport à la partie principale (52) du couvercle.

10. Le couvercle clignotant selon la revendication 7, **caractérisé en ce que**, la découpe a une forme de quadrilatère, de préférence une forme rectangulaire, et dans sa bride deux parois plates sensiblement perpendiculaires par rapport à la partie principale du couvercle et allant du bord du couvercle à l'intérieur de la découpe, sont reliées par une paroi non perpendiculaire.

11. Procédé de fabrication d'un couvercle clignotant, apte à sceller les constructions installées dans un toit d'un bâtiment, sous une forme d'une mince feuille de métal sensiblement plate pourvue à sa périphérie d'au moins une découpe polygonale où au moins deux côtés de cette découpe sont unilatéralement inclinés formant les parois du couvercle réunies en bride uniforme de cette découpe et réunies avec une partie principale du couvercle, **caractérisé en ce que**, il comprend les étapes consistant à:
formation dans une feuille de métal d'une zone gaufrée (17) ayant un fond de forme et dimensions correspondant à la forme et les dimensions désirées de la découpe du couvercle finalement produite, où le fond de la zone gaufrée (17) est connecté à la partie principale (12), sensiblement plate, du couvercle par des parois latérales (13, 14) de cette découpe, et entre ces deux parois au moins une paroi non perpendiculaire (13) est formée de manière que le plan franchissant la ligne de connexion de cette paroi avec la partie principale (12) du couvercle et le bord de cette paroi est disposé à un angle obtus (α) par rapport à la partie principale (12) du couvercle ; et le découpage du fond de la zone gaufrée (17) à partir de la feuille de métal formant ainsi une découpe dans le couvercle.

12. Le procédé selon la revendication 11, **caractérisé en ce que**, le fond de la zone gaufrée (17) du couvercle est découpé à l'aide d'un outil de découpage avec un timbre perpendiculairement mobile par rapport à la surface principale du couvercle qui est produit.

13. Le procédé selon la revendication 11 ou 12, **caractérisé en ce que**, deux zones gaufrées sont formées en même temps et par la suite découpées et le couvercle avec deux découpes est produit.
